(19) Europäisches Patentamt
European Patent Office
Office européen des brevets

(11) Veröffentlichungsnummer: 0 013 758
B1

(12) # EUROPÄISCHE PATENTSCHRIFT

(45) Veröffentlichungstag der Patentschrift: 03.02.82

(51) Int. Cl.³: D 21 C 5/02

(21) Anmeldenummer: 79105369.7

(22) Anmeldetag: 24.12.79

(54) **Verfahren zum Deinken von bedrucktem Altpapier.**

(30) Priorität: 27.01.79 DE 2903150

(43) Veröffentlichungstag der Anmeldung: 06.08.80 (Patentblatt 80/16)

(45) Bekanntmachung des Hinweises auf die Patenterteilung: 03.02.82 Patentblatt 82/05

(84) Benannte Vertragsstaaten: BE CH FR GB IT NL SE

(56) Entgegenhaltungen:
DE - A - 2 544 242
GB - A - 1 273 678
US - A - 3 822 178
US - A - 4 013 505
US - A - 4 162 186

(73) Patentinhaber: Henkel Kommanditgesellschaft auf Aktien
-Patentabteilung- Postfach 1100 Henkelstrasse 67
D-4000 Düsseldorf 1 (DE)

(72) Erfinder: Hornfeck, Klaus
August-Burberg-Strasse 34
D-4020 Mettmann (DE)
Erfinder: Schweizer, Dieter, Dr.
Achenbachstrasse 7
D-4000 Düsseldorf 1 (DE)

EP 0 013 758 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Verfahren zum Deinken von bedrucktem Altpapier

Deinking-Verfahren haben die Aufgabe, Druckfarben aus Altpapier zu entfernen. Die so gewonnenen Regeneratstoffe werden in großem Umfang bei der Erzeugung von Druckpapieren und Toilettenkrepp eingesetzt.

Das Deinking-Verfahren besteht im wesentlichen aus folgenden Teilschritten :

1. Ablösung der Druckfarbenpigmente von der Faser im Stofflöser (Pulper) durch Zusatz geeigneter Chemikalien,
2. Ausscheidung der abgelösten Druckfarbenteilchen aus der Faserstoffsuspension.

Der zweite Verfahrensschritt geschieht vorzugsweise mit Hilfe des Flotationsprinzips.

Üblicherweise wird das Deinken bei alkalischen pH-Werten von etwa 9,5-11 unter Zusatz von Alkalisilikat, oxidativ wirkenden Bleichmitteln, höheren Fettsäuren oder deren löslichen Salzen, sowie nichtionogenen Dispergiermitteln durchgeführt. Die Einstellung des pH-Wertes, vorzugsweise pH 10-10,5, erfolgt mittels Alkalihydroxid, z.B. NaOH. Der Alkalizusatz liefert die zur Verseifung der Druckfarbenbindemittel, zur Druckfarbenablösung und zur Neutralisation der eingesetzten Fettsäuren erforderliche Alkalität. Diese führt jedoch bei dem meist verwendeten holzstoffhaltigen Altpapierstoff aus Zeitungen und Zeitschriften zu starker Vergilbung.

Die Vergilbung wird durch den Einsatz von oxidativ wirkenden Bleichmitteln, wie Wasserstoffperoxid oder Natriumperoxid, weitgehend verhindert. Bei Verwendung von Natriumperoxid ist ein Zusatz von Alkalihydroxid nicht oder nur in geringerem Maße erforderlich. Zur Stabilisierung des Aktivsauerstoffs des Peroxid-Bleichmittels wird Aktivsauerstoffs des Peroxid-Bleichmittels wird Alkalisilikat (Wasserglas) verwendet. Dieses wirkt durch Bindung der Schwermetallionen ; gleichzeitig puffert es die Bleichlösung und wirkt als Korrosionsinhibitor.

Die Fettsäuren werden in der alkalischen Flotte in deren Metallsalze überführt, die die Oberflächenspannung der Phase Wasser/Luft herabsetzen. Ein Teil der gebildeten löslichen Metallseife wird durch Calciumionen des Betriebswassers in unlösliche Calcium-Seife überführt. Diese lagert sich an die abgelösten Druckfarbenteilchen an und hydrophobiert sie. Dadurch werden sie von den hydrophilen Fasern abgehoben und können durch Flotation ausgeschieden werden. Als Fettsäuren kommen gesättigte und ungesättigte Monocarbonsäuren mit C-Kettenlängen von $C_8$ bis $C_{22}$, insbesondere Ölsäure, in Betracht. Anstelle der Fettsäuren können auch deren lösliche Salze, z.B. Alkali- oder Alkanolaminsalze, eingesetzt werden.

Die nichtionogenen Dispergiermittel dienen als Dispergatoren für die Druckfarbenpigmente. Sie wirken außerdem als Schäumer bei der Flotation. Geeignete nichtionogene Dispergiermittel sind Alkylenoxidaddukte an höhere hydrophobe Reste enthaltende Verbindungen, z.B. $C_{10}$-$C_{22}$-Fettalkohole oder $C_4$-$C_{12}$-Alkylphenole mit einem Gehalt and 5-40 Alkylenoxidgruppen. Als Alkylenoxide kommen Ethylenoxid und/oder Propylenoxid in Betracht. Beispiele für geeignete Dispergiermittel sind das Addukt von 8-12 Mol Ethylenoxid an ein Oleyl-Cetylalkoholgemisch, oder das Addukt von 9,5-10 Mol Ethylenoxid an Isononylphenol.

Üblicherweise werden folgende Chemikalien, bezogen auf Altpapier, eingesetzt :

2-5 Gew.-% Alkalisilikat (Na-Wasserglas)
0,5-3 Gew.-% Wasserstoffperoxid (100 %ig)
0,5-2 Gew.-% Natriumhydroxid (100 %ig)
0,5-2 Gew.-% Fettsäuren oder deren Salze
0,02-0,5 Gew.-% nichtionogene Dispergiermittel

Die Stoffdichte im Pulper beträgt 4-6 Gew.-% und in den Flotationszellen 0,5-2 Gew.-%. Die Prozeßtemperatur beträgt üblicherweise 35-45 °C. Die Flotation erfolgt in bekannter Weise durch Einblasen von Luft in die Stoffsuspension. Die Verweilzeit des Stoffes in den Flotationszellen beträgt etwa 10-20 Minuten.

Die Beurteilung des deinkten Papiers erfolgt mittels Weißgradmessung, wobei der Weißgrad in Prozent angegeben wird. Mischt man Tageszeitungen und Illustrierte im Verhältnis 1:1, und behandelt sie mit den vorstehend genannten Chemikalien nach der bekannten Arbeitsweise, so wird ein Weißgrad von 56-60 % erzielt. Demgegenüber beträgt der Weißgrad der unbedruckten Randstreifen 65-68 %.

Das bekannte Verfahren weist jedoch einige Nachteile auf. Die Verweilzeit in den Flotationszellen von 10-20 Minuten gestattet nur eine geringe Durchsatzleistung, weil sonst der Weißgrad deutlich abnimmt. Ferner agglomerieren sich die im flotierten Papierstoff noch vorhandenen hydrophobierten Druckfarben im Stoff-Führungssystem und verursachen Betriebsstörungen auf der Papiermaschine. Dadurch ist auch das Verhältnis von deinktem Stoff zu Neustoff begrenzt. Schließlich führt die relativ hohe Prozeßtemperatur einerseits zur Zersetzung des Peroxids, andererseits zur Erweichung von über das Altpapier eingebrachten Kunstharz-Bindemitteln (Hot-melts ; z.B. aus gebundenen Katalogen oder dgl.). Diese klebrigen Rückstände lassen sich nur schwer mechanisch entfernen und verursachen Betriebsstörungen.

Bisherige Versuche haben gezeigt, daß eine wesentliche Weißgradsteigerung über 60 % hinaus nur durch einen zweiten Prozeßdurchlauf möglich ist.

Aus der US-PS 4 013 505 ist z.B. ein Deinking-Verfahren bekannt, bei welchem neben alkalischen Mitteln oberflächenaktive Stoffe, darunter beispielsweise auch Fettsäurealkylolamide, eingesetzt werden, welches aber in einem weiteren Verfahrensschritt den Zusatz von gefällten Flocken von Erdalkali-Seifen und spezieller kohlenwasserstoffe als hochadsorptive Hilfsmittel zur Verhinderung der Re-Adsorption der abgelösten Farbpartikel erfordert.

In der US-PS 3 822 178 wird ein Verfahren zur Regnerierung von Wachspapier beschrieben, bei welchem unter anderem auch Fettsäurealkanolamide als Emulgatoren zum Einsatz kommen können. Das dort beschriebene Verfahren hat jedoch weder in der Aufgabenstellung noch bezüglich der Lösung etwas mit dem erfindungsgemäßen Verfahren zum Deinken von bedrucktem Altpapier zu tun.

Aufgabe der Erfindung ist es, das an sich bekannte Deinkingverfahren so zu verbessern, daß unter Beibehaltung der vorhandenen Anlagen der Druckfarbenaustrag beschleunigt, der Anteil an flotierten Druckfarben unter Weißgradsteigerung erhöht und die Prozeßtemperatur ohne Bleichverlust gesenkt werden kann.

Gegenstand der Erfindung ist ein Verfahren zum Deinken von bedrucktem Altpapier durch Behandeln des Papierstoffes im Stofflöser bei alkalischen pH-Werten mittels Alkalisilikat, oxidativ wirkenden Bleichmitteln, höheren Fettsäuren oder deren Salzen und nichtionogenen Dispergiermitteln und Ausscheiden der abgelösten Druckfarbenteilchen aus der Faserstoffsuspension durch Flotation, dadurch gekennzeichnet, daß man im Stofflöser 1-20 Gew.-%, bezogen auf Fettsäure oder Fettsäuresalz, eines Fettsäurealkanolamids der allgemeinen Formel

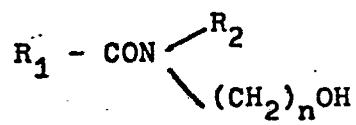

worin

$R_1$ = eine $C_{10}$-$C_{22}$-Alkyl- oder Alkenylgruppe,
$R_2$ = H oder $(CH_2)_n$ OH
n = eine ganze Zahl von 2-4
ist, zusetzt.

Geeignete Fettsäurealkanolamide sind beispielsweise das Mono- oder Diethanolamid der $C_{12}$-$C_{14}$-Kokosfettsäure oder Ölsäure.

Die Fettsäurealkanolamide werden in Mengen von 1-20 Gew.-% bezogen auf Fettsäure oder Fettsäuresalz, eingesetzt. Bevorzugt werden Mengen von 5-15 Gew.-%. Die Fettsäuren bzw. Fettsäuresalze werden im Pulper in einer Menge von 0,5-2 Gew.-%, bezogen auf Altpapier, zugesetzt. Besonders bevorzugt wird Ölsäure, die auch ganz oder teilweise als Alkanolaminsalz vorliegen kann.

Das Deinking-Verfahren wird in an sich üblicher Weise unter Einsatz der eingangs genannten Chemikalien durchgeführt. Es werden Altpapiere aus Zeitungen, Illustrierten, Katalogen usw. verarbeitet, wobei die Stoffdichte im Pulper 4-6 Gew.-% beträgt.

Infolge der guten Druckfarbenablösung wird ein hoher Druckfarbenaustrag bei der Flotation und damit ein höherer Weißgrad des Papierstoffes bereits bei einmaligem Durchgang erreicht. Eine Senkung der Arbeits-temperatur auf 15-20 °C führt zu einer weiteren Verbesserung des Weißgrades, so daß selbst bei einer Verkürzung der Flotationsdauer gegenüber dem herkömmlichen Verfahren noch ausreichende Papierstoffqualitäten erhalten werden. Störungen durch koagulierte Druckfarben oder klebrige Hot-melt-Rückstände können fast völlig vermieden werden.

## Beispiele

1. 20 g eines Papiergemisches bestehend aus 10 g Tageszeitungen und 10 g Illustrierten wurden 6 Minuten bei einer Stoffdichte von 5 % bei 20 und 45 °C aufgeschlagen. Während der Aufschlagzeit wurden folgende Chemikalien, bezogen auf Papiereintrag, zudosiert :

3 Gew.-% Na-Wasserglas 37/40° Bé
1 Gew.-% Wasserstoffperoxid
1,5 Gew.-% Natriumhydroxid
1 Gew.-% Ölsäure
0,1 Gew.-% Oleyl-Cetylalkoholpolyglykolether. 7EO

Die Quellzeit betrug ca. 2 Stunden.

Der Papierstoff wurde mit Wasser von ca. 18° dH auf 1 Gew.-% Stoffdichte verdünnt und 6 Minuten in einer Denver-Flotationszelle flotiert.

Nach der Neutralisation des deinkten Stoffes mit Schwefelsäure auf pH 6,5 wurden auf einem Blattbildungsgerät Prüfblätter hergestellt.

Am Weißgradmesser wurden folgende Weißgrade ermittelt :

| Prozeßtemperatur | Weißgrad |
|---|---|
| 20 °C | 56 % |
| 45 °C | 60,5 % |

2. Es wurde wie im Beispiel 1 verfahren, die Flotationszeit betrug jedoch nur 2 Minuten. Die Weißgrade betrugen :

| Prozeßtemperatur | Weißgrad |
|---|---|
| 20 °C | 52 % |
| 45 °C | 56 % |

3. Es wurde wie im Beispiel 1 verfahren. Anstelle von 1 % Ölsäure wurde 1 % eines Gemisches, bestehend aus :
90 Teilen Ölsäure und
10 Teilen eines $C_{12}$-$C_{14}$-Kokosfettsäurediethanolamids
zudosiert. Die erhaltenen Weißgrade betrugen :

| Prozeßtemperatur | Weißgrad |
|---|---|
| 20 °C | 64,0 % |
| 45 °C | 63,5 % |

4. Es wurde wie im Beispiel 3 verfahren, die Flotationszeit betrug jedoch nur 2 Minuten.

| Prozeßtemperatur | Weißgrad |
|---|---|
| 20 °C | 61,0 % |
| 45 °C | 60 % |

5. Es wurde wie in Beispiel 1 verfahren, anstelle von 1 % Ölsäure wurde jedoch 1 % eines Gemisches aus
90 Teilen Ölsäure und
10 Teilen Ölsäurediethanolamid
zugesetzt.

| Prozeßtemperatur | Weißgrad |
|---|---|
| 20 °C | 64,5 % |
| 45 °C | 63,0 % |

6. Es wurde wie in Beispiel 5 verfahren, die Flotationszeit betrug jedoch nur 2 Minuten.

| Prozeßtemperatur | Weißgrad |
|---|---|
| 20 °C | 61,5 % |
| 45 °C | 59,5 % |

7. Es wurde wie in Beispiel 1 verfahren, anstelle von 1 % Ölsäure wurde jedoch 1 % eines Gemisches aus
90 Teilen Ölsäure und
10 Teilen eines $C_{12}$-$C_{14}$-Kokosfettsäuremonoethanolamids
zugesetzt.

| Prozeßtemperatur | Weißgrad |
|---|---|
| 20 °C | 65,5 % |
| 45 °C | 64,5 % |

8. Es wurde wie in Beispiel 7 verfahren, die Flotationszeit betrug jedoch nur 2 Minuten.

| Prozeßtemperatur | Weißgrad |
|---|---|
| 20 °C | 62,5 % |
| 45 °C | 62,0 % |

**Ansprüche**

1. Verfahren zum Deinken von bedrucktem Altpapier durch Behandeln des Papierstoffes im Stofflöser bei alkalischen pH-Werten mittels Alkalisilikat, oxidativ wirkenden Bleichmitteln, höheren Fettsäuren oder deren Salzen und nichtionogenen Dispergiermitteln und Ausscheiden der abgelösten Druckfarbenteilchen aus der Faserstoffsuspension durch Flotation, dadurch gekennzeichnet, daß man im Stofflöser 1-20 Gew.-%, bezogen auf Fettsäure oder Fettsäuresalz, eines Fettsäurealkanolamids der allgemeinen Formel

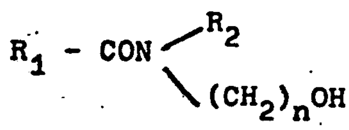

worin
$R_1$ = eine $C_{10}$-$C_{22}$-Alkyl- oder Alkenylgruppe,
$R_2$ = H oder $(CH_2)_nOH$
n = eine ganze Zahl von 2-4
ist, zusetzt.

2. Verfahren nach Anspruch 1, dadurch gekennzeichnet, daß man im Stofflöser folgende Chemikalien, bezogen auf Altpapier, zusetzt

2-5 Gew.-% Alkalisilikat
0,5-3 Gew.-% Wasserstoffperoxid (100 %ig)
0,5-2 Gew.-% Natriumhydroxid (100 %ig)
0,5-2 Gew.-% Fettsäuren oder Fettsäuresalze
0,005-0,4 Gew.-% eines Fettsäurealkanolamids der Formel (I)
0,02-0,5 Gew.-% nichtionogene Dispergiermittel.

3. Verfahren nach Anspruch 1 oder 2, gekennzeichnet durch einen Zusatz von 1-20 Gew.-%, bezogen auf Fettsäure oder Fettsäuresalz, eines Mono- oder Diethanolamids der $C_{12}$-$C_{14}$-Kokosfettsäure oder Ölsäure.

4. Verfahren nach einem der Ansprüche 1-3, dadurch gekennzeichnet, daß die Arbeitstemperatur in Stofflöser 15-25 °C, beträgt.

**Claims**

1. A process for deinking printed waste paper by treating the paper pulp in a pulper at alkaline pH-values with alkali silicate, oxidising bleaches, higher fatty acids or their salts and nonionic dispersants and separating off the detached particles of printing ink from the fibre suspension by flotation, characterised in that a fatty acid alkanolamide corresponding to the following general formula

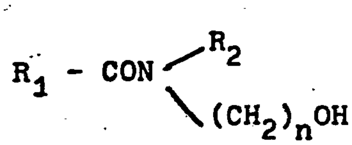

in which

$R_1$ represents a $C_{10}$-$C_{22}$-alkyl or alkenyl group,
$R_2$ represents H or $(CH_2)_nOH$ and
n is an integer of from 2 to 4
is added to the pulper in a quantity of from 1 to 20 % by weight, based on the fatty acid or fatty acid salt.

2. A process as claimed in Claim 1, characterised in that the following chemicals, based on waste paper, are added to the pulper :

from 2 to 5 % by weight of alkali silicate
from 0.5 to 3 % by weight of hydrogen peroxide (100 %)
from 0.5 to 2 % by weight of sodium hydroxide (100 %)
from 0.5 to 2 % by weight of fatty acids or fatty acid salts
from 0.005 to 0.4 % by weight of a fatty acid alkanolamide corresponding to formula (I),
from 0.02 to 0.5 % by weight of nonionic dispersants.

3. A process as claimed in Claim 1 or 2, characterised by an addition of from 1 to 20 % by weight, based on the fatty acid or fatty acid salt, of a mono- or di-ethanolamide of $C_{12}$-$C_{14}$-coconut oil fatty acid or oleic acid.

4. A process as claimed in any of Claims 1 to 3, characterised in that the working temperature in the pulper is in the range from 15 to 25 °C.

**Revendications**

1. Procédé de désencrage du vieux papier imprimé par traitement de la matière du papier en dissolveur de matière à des valeurs de pH alcalines au moyen de silicate alcalin, d'agents de blanchiment à action oxydante, d'acides gras supérieurs ou de leurs sels et d'agents dispersants non ionogènes et par séparation des particules détachées de colorant d'impression à partir de la suspension de matière fibreuse par flotation, caractérisé en ce que dans le dissolveur de matière on ajoute 1 à 20 % en poids, par rapport à l'acide gras ou au sel d'acide gras, d'une alcanolamide d'acide gras de formule générale :

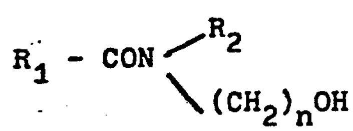

dans laquelle

$R_1$ = un groupe alcoyle ou alcényle en $C_{10}$-$C_{22}$,
$R_2$ = H ou $(CH_2)nOH$
n = un nombre entier de 2 à 4.

2. Procédé selon la revendication 1, caractérisé en ce que dans le dissolveur de matière on ajoute les produits chimiques suivants par rapport au vieux papier :

2-5 % en poids de silicate alcalin
0,5-3 % en poids de peroxyde d'hydrogène (à 100 %)
0,5-2 % en poids d'hydroxyde de sodium (à 100 %)
0,5-2 % en poids d'acide gras ou de sels d'acides gras
0,005-0,4 % en poids d'une alcanolamide d'acide gras de formule (I)
0,02-0,5 % en poids de dispersants non ionogènes.

3. Procédé selon la revendication 1 ou 2, caractérisé par une addition de 1-20 % en poids, par rapport à l'acide gras ou au sel d'acide gras, d'une mono- ou diéthanolamide d'acide gras de coco en $C_{12}$-$C_{14}$ ou d'acide oléique.

4. Procédé selon l'une des revendications 1 à 3, caractérisé en ce que la température opératoire dans le dissolveur de matière s'élève à 15-25 °C.